# EUROPEAN PATENT SPECIFICATION

(11) **EP 3 016 478 B1**
(45) Date of publication and mention of the grant of the patent: **03.10.2018**
(21) Application number: 14190795.6
(22) Date of filing: 29.10.2014
(51) Int. Cl.: H05B 33/08, H02M 3/315, H02J 1/10, H02M 1/00

(54) **Joint control of output power in a multichannel LED driver**
Gemeinsame Steuerung der Ausgangsleistung in einem mehrkanaligen LED-Treiber
Commande combinée de la puissance de sortie dans un pilote de DEL multicanal

(43) Date of publication of application: 04.05.2016
(73) Proprietor: Helvar Oy Ab, 02150 Espoo (FI)
(72) Inventor: Villa, Juha, 03600 Karkkila (FI)
(74) Representative: Berggren Oy, Helsinki & Oulu

(56) References cited:
- DE-A1- 3 221 873
- US-A1- 2005 213 353

## Description

### FIELD OF THE INVENTION

The example embodiments of the present invention relate to control of a driver device for operating one or more light-emitting semiconductor devices, such as light emitting diodes (LEDs), that can be coupled to two or more parallel channels of the driver device. In particular, one or more example embodiments of the present invention relate to jointly controlling the output power of such parallel channels of a driver device.

### BACKGROUND OF THE INVENTION

Light fixtures that rely on light emitting semiconductor devices such as light emitting diodes (LEDs) as the source of light typically comprise a driver device, the task of which is to convert input power to output current and voltage of suitable magnitude so that the light radiated by the light emitting semiconductor devices has desired brightness, color temperature, and/or possible other characteristics. In the following the acronym LED is used in a broad sense that covers all kinds of light emitting semiconductor devices, such as traditional LEDs, organic LEDs (OLEDs), laser diodes, and the like.

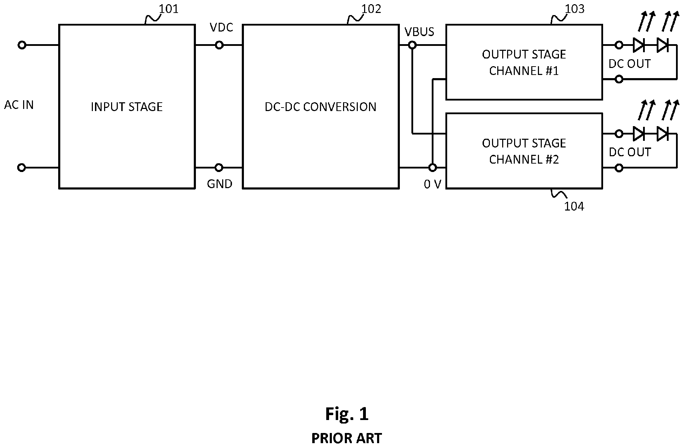

A multichannel LED driver is one that can feed output current through two or more LEDs or LED chains in parallel, so that at least some characteristics of the current through each LED chain can be controlled independently. Fig. 1 illustrates schematically an example of a two-channel LED driver. Input power in AC (altenating current) form is fed into an input stage 101, which may comprise e.g. fuses or other protective devices, EMI (electromagnetic interference) filtering, rectification, and PFC (power factor correction) functionalities. At the output of the input stage 101 a DC (direct current) voltage appears between two output nodes VDC and GND. This DC voltage is fed into a DC-DC conversion block 102, which converts it to another DC voltage. The DC-DC conversion block 102 may comprise e.g. a switched-mode power supply, and it may e.g. change the magnitude of the DC voltage. At the output of the DC-DC conversion block 102 a DC voltage appears between two output nodes VBUS and 0 V. If the DC-DC conversion block 102 includes galvanic isolation, the electric potentials of its output nodes are floating in relation to the electric potentials of its input nodes. In a non-isolating DC-DC conversion block the input node GND and the output node 0 V may belong to a common ground rail and have the same electric potential, often referred to as the ground potential.

Two parallel output stages 103 and 104 are coupled to receive the DC voltage produced by the DC-DC conversion block 102. Each output stage may comprise a switched-mode power supply of its own. One or more LEDs or LED chains are coupled to the output nodes DC OUT of each output stage. Controllably driving LEDs typically involves performing relatively accurate current control, so that the effective value of electric current flowing through the LEDs is made to have a particular value. In constant-current LED drivers said effective value is kept constant, while in controllable LED drivers said effective value can be changed in a relatively wide range, like between 1% and 100% of its maximum value. Controlling the output voltage is not equally important, as long as the output voltage remains between some safe limits; it is common to allow the output voltage to freely assume a value that equals the forward voltage drop across one LED times the number of LEDs coupled in series between the output nodes.

The manufacturer of a LED driver typically announces the key performance figure of each driver model in the form of its maximum output power. The power figure is given per channel in a multichannel LED driver. For example a driver labeled "1x70W" gives a maximum output power of 70 watts on one channel, while for example a "2x25W" driver has two channels, each of them dimensioned for 25 watts of output power. DC power is the voltage in volts times the current in amperes, so controlling the output power of each individual channel may require building a current limiter circuit and a voltage limiter circuit into each channel. Multiple limiter circuits make the structure complicated and expensive to manufacture. The multiple limiter circuits also reserve circuit board space and give rise to reliability concerns in the form of an increasing number of possible fault points and widening distribution in actual performance figures due to random variation in component properties.

A prior art document US 2005/213353 A1 discloses, among others, an arrangement where a control circuit knows to take the desired output powers of parallel output channels into account in controlling a power factor correction stage.

Another prior art document DE 32 21 873 A1 discloses a method for reducing the energy consumption of a set of theatrical lights so that the rate at which the reducing is made takes the adaptation time of the human eye, so that the change in lighting level is not perceivable to users.

### SUMMARY OF THE INVENTION

It is an object of the present invention to provide a technique for controlling output power in a multichannel LED driver device in a more versatile and flexible manner.

The object(s) of the invention are reached by a driver device and by a lighting arrangement as defined by the respective independent claims.

According to a first example embodiment of the invention, a LED driver device is provided, the LED driver device comprising
a first converter means for producing a bus voltage, said first converter means having a power rating,
two or more output stages, each coupled to receive said bus voltage and each configured to provide, at an output power specific to the respective output stage, output current to one or more light-emitting semiconductor devices coupled to the output of the respective output stage, and
a common output power limiter configured to limit the sum of output powers of said two or more output stages to a combined power value that is smaller than or equal to said power rating.

According to a second example embodiment of the invention, a lighting arrangement is provided, the lighting arrangement comprising:
a driver device of the kind described above, and
light output means electrically coupled to said driver device.

According to a third example embodiment of the invention, a method for providing output current for one or more light-emitting semiconductor devices is provided, the method comprising:
producing a bus voltage with a first converter means having a power rating,
providing output current to one or more light-emitting semiconductor devices through two or more output stages, each coupled to receive said bus voltage and each configured to provide said output current at an output power specific to the respective output stage, and
jointly limiting the sum of output powers of said two or more output stages to a combined power value that is smaller than or equal to said power rating.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF THE DRAWINGS

Figure 1 schematically illustrates some components of a two-channel LED driver in accordance with prior art.
Figure 2 schematically illustrates some components of a LED driver in accordance with an example embodiment.
Figure 3 schematically illustrates some components and connection possibilities in an output stage of one channel based on a buck converter.
Figure 4 schematically illustrates some components and connections in an output stage in accordance with the general principle shown in fig. 3.
Figure 5 schematically illustrates an example of a circuit for joint output power control of several channels.
Figure 6 schematically illustrates some components of a two-channel LED driver in accordance with an example embodiment.
Figure 7 schematically illustrates some components of a circuit for joint output power control of two channels.
Figure 8 illustrates a method for providing output current for one or more light-emitting semiconductor device in accordance with an example embodiment.
Figure 9 schematically illustrates some components of a LED driver in accordance with an example embodiment.
Figure 10 schematically illustrates an example of a circuit for joint output power control of two channels.

### DETAILED DESCRIPTION

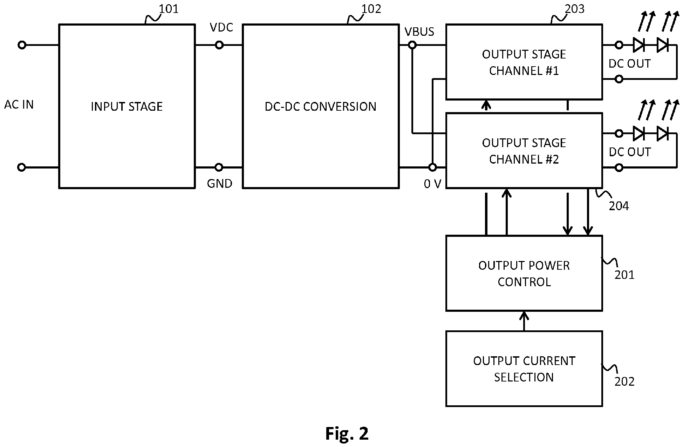

Fig. 2 illustrates schematically a driver device for providing output current for one or more light-emitting semiconductor devices, referred to as LEDs for brevity. Coupled to an input stage 101 the driver device comprises a first converter means 102 for producing a bus voltage. In the illustration of fig. 2 the bus voltage is the difference of electric potential between the nodes marked VBUS and 0 V. The first converter means 102 has a power rating, which means a maximum amount of electric power that the first converter means 102 can safely transfer between its input nodes and its output nodes. As an example, we may consider that the power rating of the first converter means 102 is 50 watts, but it could quite as well be as small as just a few watts, or even several hundreds of watts.

The driver device of fig. 2 comprises two output stages 203 and 204. Each of them is coupled to receive the bus voltage from the first converter means 102. Each of them is also configure to provide, at an output power specific to the respective output stage, output current to one or more LEDs coupled to the output DC OUT of the respective output stage. Saying that an output power is specific to the respective output stage does not mean that each output stage would be configured to operate at exactly some predetermined output power. Rather, if a snapshot was taken at some moment of time and the output power of each output stage was examined, each of them could be delivering output current at some momentary output power value that could be different from the momentary output powers of the other output stages of the same driver device.

Electric power that comes out of the output stages must come through the first conversion means 102. Therefore it is essential that the sum of output powers of all output stages does not become higher than the power rating of the first conversion means 102. The driver device of fig. 2 comprises a common output power limiter 201 that is configured to limit the sum of output powers of the output stages 203 and 204 to a combined power value that is smaller than or at most equal to the power rating of the first conversion means 102. If there were more than two output stages coupled to receive the bus voltage from the first conversion means 102, similar power-limiting considerations would apply: the common output power limiter should limit the sum of output powers of all output stages to a combined power value that did not exceed the power rating of the first conversion means 102.

The use of a common output power limiter involves the advantage that the extraction of output power can be divided flexibly between the output stages. As an example, if the power rating of the first conversion means 102 is 50 watts as suggested above and there are two parallel output stages, one may take 25 watts out of each of them, or one may take e.g. 35 watts out of one output stage and 15 watts out of the other. If the output stages have been built with tolerant enough components, one may even leave one output stage completely unused and take the whole 50 watts out of the other.

Many driver devices for LEDs are configurable with respect to the maximum output current value. As an example, the driver device may comprise a two-pole connector, to which a so-called ISET resistor can be coupled. The resistance value of the ISET resistor makes such driver device take a particular output current value into use. In some embodiments of the invention it may be advantageous to combine the configurability of the maximum output current with the common output power limiter, for which reason fig. 2 shows the output current selection block 202 as having an effect on the operation of the common output power limiter 201. Examples of such combining are given later in this description.

Assuming now that the selection of the output current value affects both output stages 203 and 204 in the same way through the common output power limiter 201, the flexible division of output power explained above means that the output voltage may differ between output stages. Taking again the exemplary assumption of a power rating of 50 watts for the first conversion means 102, and assuming that an output current value 700 milliamperes has been jointly selected for both output stages, the user may couple different numbers of LEDs in series to the output nodes of the output stages. An exemplary LED could be rated for 350 mA nominal current and have a 3.2 volts forward voltage drop. Two parallel chains of such exemplary LEDs could be coupled to the output of each output stage, so that the total output current provided by each output stage would be 700 mA. The LED chains coupled to the output of the first output stage could have 15 serially coupled LEDs each, while the LED chains coupled to the output of the second output stage could have 7 serially coupled LEDs each. This way the output voltage of the first output stage would assume the value 48 V, and its output power would be 33.6 W. The output voltage of the second output stage would assume the value 22.4 V, and its output power would be 15.7 W.

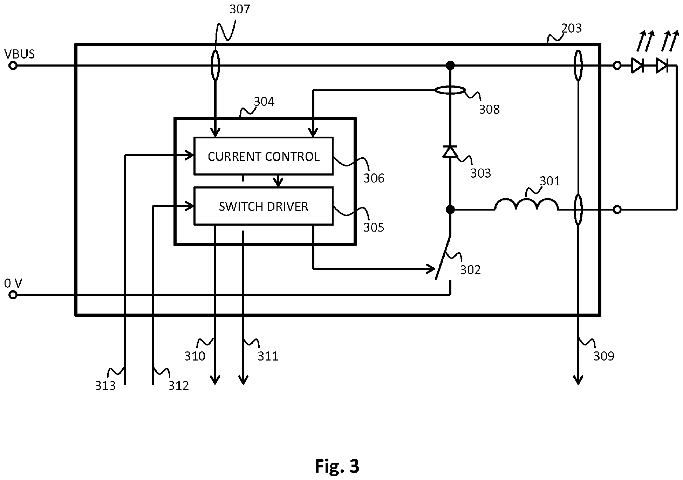

Fig. 3 illustrates schematically some components and connection possibilities in an output stage of one channel. The output stage shown in fig. 3 has the configuration of a switched-mode power supply; in particular the output stage shown in fig. 3 is based on the principle of a buck converter. The output stage 203 is coupled to receive the bus voltage from a first converter means (not shown in fig. 3) through its input voltage nodes VBUS and 0 V. The primary current path goes from the input voltage node VBUS to the output node that is coupled to the anode of the first LED, through the LEDs, back through the output node that is coupled to the cathode of the last LED, through the coil 301, through the switch 302, and to the other input voltage node 0 V. The freewheeling current path goes around the loop constituted by the LEDs, the coil 301, and the freewheeling diode 303. The driver circuit 304 comprises at least a switch driver 305 responsible for forming the switching pulses, as well as an output current limiting arrangement 306. The schematic illustration of fig. 3 is simplified for graphical clarity; a typical real-life buck converter might have a number of additional components for e.g. attenuating unwanted oscillations, fine-tuning current and voltage amplitudes, and the like.

Current measurements for producing inputs to the output current limiting arrangement 306 are shown schematically as 307 and 308; it is possible to measure the current on the primary current path (measurement 307) and/or on the freewheeling current path (measurement 308). It would also be possible to perform current measurement at a point that belongs to both the primary current path and the freewheeling current path.

In order to give an output power limiter (which as such is not shown in fig. 3) information about the momentary conditions within the output stage it is possible to extract indicative values at various locations of the output channel. Fig. 3 shows schematically the possibilities of using a measurement 309 of the output voltage, as well as some indicative values 310 and 311 taken from the switch driver 305 and the output current limiting arrangement 306 respectively. An indicative value is the measured or detected value of some quantity that has significance to determining the output power of the output stage.

Fig. 3 also shows schematically the possibility of bringing setpoint values or other control information to the switch driver 305 or the output current limiting arrangement 306 as arrows 312 and 313 respectively. Setpoint values or other control information may come e.g. from an output power limiter or a controlling processor, and they may have the effect of changing the operation of the switch driver 305 and/or the output current limiting arrangement 306 with corresponding effects on the output power produced by the output stage 203.

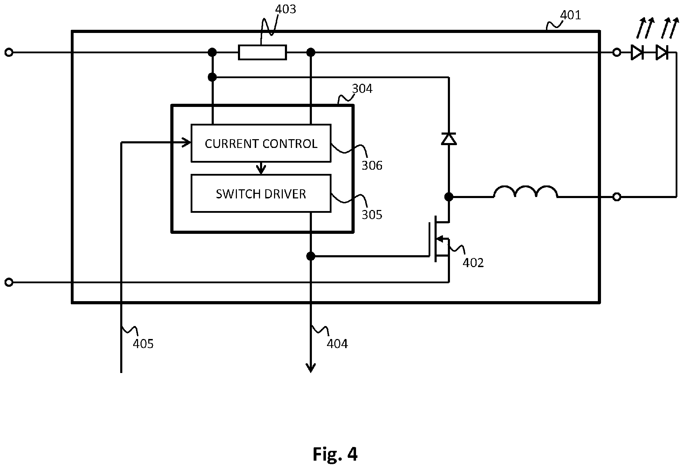

Fig. 4 illustrates schematically a special case of the general principles explained above with reference to fig. 3. The output stage 401 of fig. 4 has the configuration of a switched-mode power supply (in particular: a buck converter) with a switching transistor 402 acting as the switch on the primary current path. A current measurement resistor 403 of small resistance is in this case placed at a point that is part of both the primary current path and the freewheeling current path. Connections to the output current limiting arrangement 306 go from both ends of the current measurement resistor 403, so that the output current limiting arrangement 306 may use the voltage across the current measurement resistor 403 as a current measurement value. The output current limiting arrangement 306 is configured to limit the output current of the output stage 401 to an output current value that is smaller than or equal to a current limit value.

A control output or indicative value is taken from the output stage 401 in accordance with the arrow 404. In this case the control output carries an output voltage indicator, i.e. a signal indicative of the output voltage of the output stage 401. Remembering that the output stage 401 has the configuration of a buck converter, we may recall that a basic characterizing equation of buck converters is D = Vout/Vin, where D is the duty cycle, Vout is the output voltage, and Vin is the input voltage. If the input voltage Vin is known and held constant, the output voltage Vout can be calculated from the simple linear equation Vout = Vin * D. In other words, a voltage waveform having the duty cycle D can be used as an output voltage indicator, because the duty cycle is directly proportional to the output voltage. Such a voltage waveform can be taken for example from the gate of the switching transistor 402, as in fig. 4.

A control input is brought to the output stage 401 in accordance with the arrow 405. The control input comes to the output current limiting arrangement 306, and it affects the output current limiting function by increasing or decreasing the current limit value that the output current limiting arrangement uses.

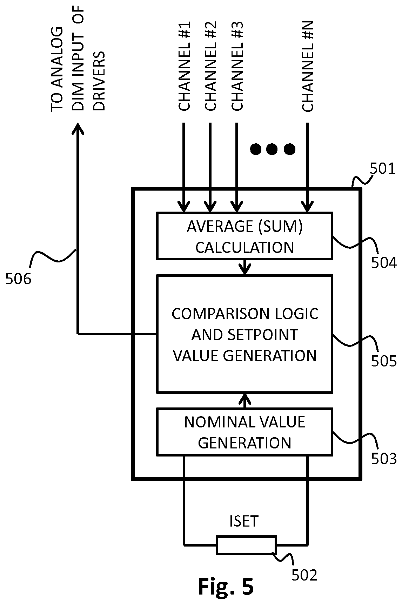

Fig. 5 illustrates schematically an example of a common output power limiter 501, which includes output current selection functionalities. An ISET resistor 502 is coupled to a nominal value generating block 503, which generates a nominal value, typically a voltage level, depending on the resistance of the ISET resistor 502. In a simple current-configurable LED driver without joint output power limitation, a nominal value generated this way could be taken into account as a part of a current feedback loop that sets the output current of the LED driver at a desired value.

Inputs from above in fig. 5 come from parallel output stages. Each one of them carries an output voltage indicator, for example a voltage waveform taken from one electrode (for example gate, or drain) of a switching transistor in the respective output stage. Irrespective of how it was generated, an output voltage indicator indicates directly or indirectly the output voltage of the respective output stage. The common output power limiter 501 is configured to take an averaged sum of all output voltage indicators, as illustrated by block 504 in fig. 5. An averaged sum is an example of the more general concept of an indicator value indicative of the sum of output powers of the two or more output stages. Also some further derivative of the averaged sum can be used as an indicator value; such further derivatives may be calculated in the comparison logic and setpoint value generation block 505 in fig. 5. In the continuation we will particularly consider a case in which the averaged sum is converted into a value that is inversely proportional to the averaged sum, and said value is used as the indicator value.

An output 506 goes from the common output power limiter 501 (particularly from the comparison logic and setpoint value generation block 505) to a control input of each output stage. Assuming that the output stages have the configuration illustrated in fig. 4 above, the output 506 shown in fig. 5 may go to the control input 405 shown in fig. 4. This way the common output power limiter 501 is configured to decrease the current limit value used by the output current limiting arrangement 306 as a response to said indicator value reaching or going beyond the nominal value, where the concept of going beyond should be understood as going beyond in any direction: if the nominal value is of the "upper limit" type, going beyond the nominal value means becoming larger than the nominal value, while if the nominal value is of the "lower limit" type, going beyond the nominal value means becoming smaller than the nominal value.

The operation of output stages 401 of the kind illustrated in fig. 4 together with a common output power limiter 501 can be illustrated with a numerical example. Let us again assume, as an example, that two output stages are coupled to receive their bus voltage from a first conversion means rated for 50 watts. Let us also assume that the bus voltage has a fixed value 55 volts, and that each output stage has a built-in output voltage limiting function that does not allow its output voltage become higher than 50 volts; for example, the driver circuit responsible for producing the switching pulses for the switching transistor may be capable of a maximal 95% duty cycle. Even without such a built-in output voltage limiting function the basic operating principle of a buck converter would ensure that the output voltage could never be higher than 55 volts, i.e. higher than the fixed bus voltage value.

Let us then assume that first an ISET resistor is in use that corresponds to a 350 mA output current from each output stage. It is noted that at a maximum output voltage 50 V and a maximum output current 350 mA, a single output stage cannot provide more than 17.5 watts of output power, so the power-limiting functions of the common output power limiter 501 would in practice not be needed at all. The nominal value that is generated in block 503 and that corresponds to a maximum output current 350 mA can be passed as such through the output 506 to the output current limiting arrangements of the two output stages.

However, let us change to an assumption that an ISET resistor is in use that corresponds to a 700 mA output current from each of said two output stages. At a maximum output voltage 50 V, a single output stage could provide 35 watts of output power, so the combined output powers of the two output stages could risk exceeding the power rating of the first converter means. For example, if 12 LEDs of 3.2 V forward voltage drop and 700 mA nominal current were coupled in series to each output stage, the output voltage of each output stage would be 38.4 V, corresponding to 26.9 W of output power per output stage. The sum of the output powers would exceed the assumed power rating 50 W of the first converter means.

In this case the common output power limiter 501 should produce an indicator value for example by taking an averaged sum of the output voltage indicators in block 504 and converting it into a value that is inversely proportional to said averaged sum. If the indicator value so obtained was smaller than the nominal value generated in block 503 (i.e. went beyond the nominal value in the downwards direction), the setpoint value output from block 505 should have the effect of decreasing the current limit value used in the output stages by an amount proportional to the difference between the indicator value and the nominal value.

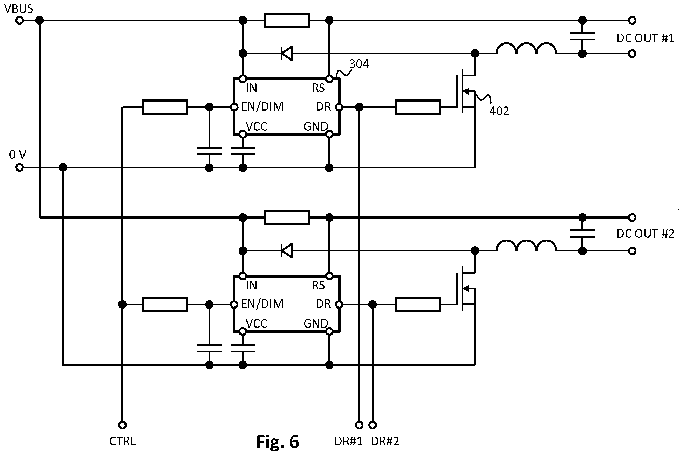

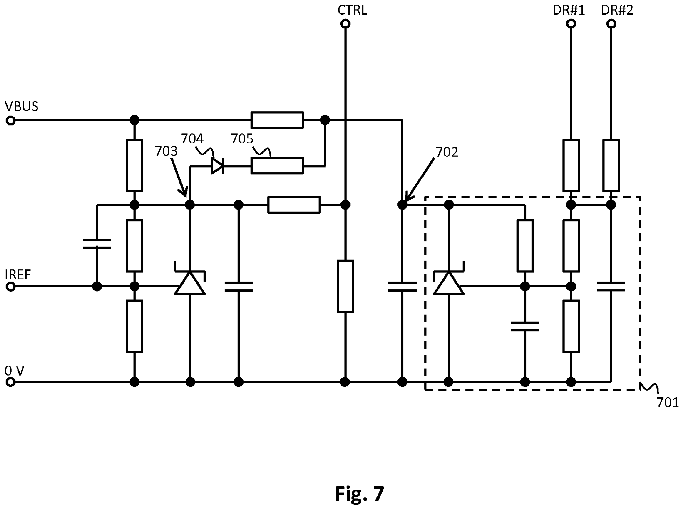

Figs. 6 and 7 correspond to figs. 4 and 5 and show exemplary circuit diagrams that can be used to implement the functionalities of two output stages (fig. 6) and a common output power limiter (fig. 7). The two output stages shown in fig. 6 are identical, so in the following it suffices to give reference designators to components of one of them. Each of the two output stages in fig. 6 has the configuration of a switched-mode power supply (in particular: a buck converter) with a switching transistor 402. Each of the two output stages comprises a driver circuit 304 for generating switching pulses for the switching transistor 402. The driver circuit 304 comprises a current feedback functionality that is configured to act as an output current limiting arrangement, i.e. configured to limit the output current of the respective output stage to an output current value that is smaller than or equal to a current limit value.

The driver circuit 304 also comprises a dimming input marked as EN/DIM. The driver circuit is configured to respond to an analog dimming signal brought to the dimming input by decreasing the current limit value used by the output current limiting arrangement. Driver circuits of this kind are commercially available; for example at the time of writing this description the company Monolithic Power Systems (MPS) based in San Jose, California, markets one with the identifier MP24894. The explanations of the pin markings on said driver circuit of MPS are
IN - input supply pin,
RS - LED current sense input,
EN/DIM - enable / dimming command input,
GND - ground,
DR - gate-driver output,
VCC - internal regulator output.

Concerning the EN/DIM pin of the MP24894, a voltage greater than 0.3 V between it and the GND pin turns on the driver circuit, while a voltage rising from 0.3 V to 2.7 V causes the internally applied current limit value to change so that the LED current will change from 20% to 100% of the maximum LED current. The voltage range between 0.3 V to 2.7 V may be called the dimming range. If some other driver circuit is used, the dimming range may have some other endpoints.

The lines labelled DR#1 and DR#2 carry output voltage indicators of the first and second output stages respectively. In particular, these lines carry voltage waveforms essentially taken from the gate electrode of the respective switching transistors. Under the assumption of constant bus voltage, these voltage waveforms indicate output voltages of the respective output stages. The line labelled CTRL is coupled (through a respective resistor) to the EN/DIM pin of each driver circuit 304.

In the common output power limiter of fig. 7 the components in block 701 are responsible for taking an averaged sum of the output voltage indicators and converting said averaged sum into a value that is inversely proportional to said averaged sum. This value is the electric potential of point 702 in the circuit diagram of fig. 7, or the electric potential difference between it and the 0 V rail. Assuming that the control input IREF on the left is coupled to a nominal value generation block, such as a circuit containing an ISET resistor, a nominal value appears as the electric potential of point 703 in the circuit diagram of fig. 7.

The comparison between the indicator value of point 702 and the nominal value of point 703 takes place with the help of the series connection of a diode 704 and a resistor 705. If the indicator value of point 702 is larger than or equal to the nominal value, the common output power limiter does not need to limit the output power (remembering that the indicator value was inversely proportional to the averaged sum of the output voltage indicators). In this case it is essentially the nominal value at point 703 that goes to the EN/DIM pins of the driver circuits through the CTRL line, with the effect of not decreasing the current limit value from what it is just as a consequence of using a particular ISET resistor. If, on the other hand, the indicator value of point 702 is smaller than the nominal value (by at least the magnitude of the forward voltage drop of diode 704), some of the electric potential of point 703 bleeds out through the diode 704 and resistor 705. The voltage that eventually goes to the EN/DIM pins of the driver circuits through the CTRL line constitutes a setpoint value that is somewhere within the dimming range, and has the effect of decreasing the current limit value by an amount that is proportional to the difference between the indicator value and the nominal value.

In the embodiment of figs. 6 and 7 the output voltage indicators on lines DR#1 and DR#2 are essentially voltage waveforms taken from the gates of the respective switching transistors. An increase in the duty cycle of a switching transistor is by definition an increase of the relative amount of time its gate spends at a high potential. It means an increase in the output voltage of the respective buck converter, and also an increase in the relative amount of time the corresponding output voltage indicator line (the DR#1 line or the DR#2 line) is at high potential. Thus the summing and averaging that takes place in the right half of the block 701 results in a larger relative current flowing into the shunt regulator in the left half, with the result that a correspondingly smaller relative current is drawn from the VBUS line (or any other supply voltage source that is used to bring a supply voltage to the shunt regulator). This is why the electric potential of point 702 will eventually be inversely proportional to the averaged sum of the output voltage indicators.

An alternative embodiment could be produced, in which the output voltage indicators would be voltage waveforms taken from the drain of each respective switching transistor. In such an alternative embodiment it must be taken into account that an increase in the duty cycle of a switching transistor means a decrease in the relative amount of time its drain spends at high potential, so the behavior of an averaged sum of such output voltage indicators as a function of buck converter duty cycles would be a mirror image of that described above. Thus the averaged sum could in that case be used as an indicator value as such, without performing an inversion as in fig. 7. Alternatively one could perform an inversion as in fig. 7, but the way in which the output power limiter reacts to the indicator value going beyond the nominal value should be redesigned keeping in mind that this time going beyond the nominal value would mean becoming greater than the nominal value.

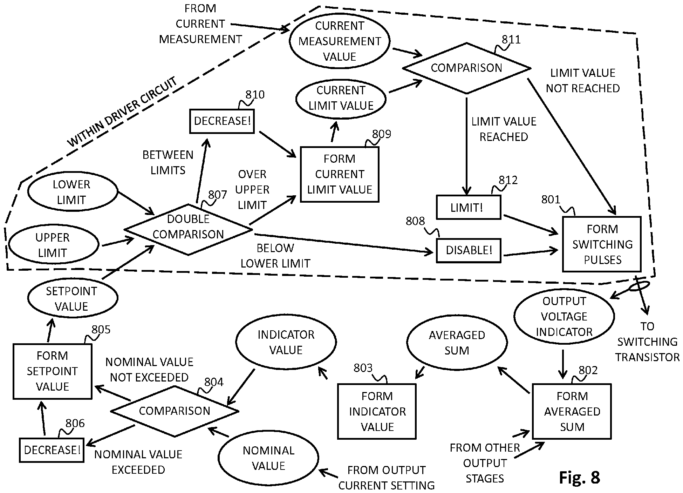

Fig. 8 illustrates aspects of a method that can be executed by a driver device for LEDs. During operation the various parts of the driver device execute steps of the method simultaneously and without any particular sequential order: a bus voltage is produced with a first converter means having a power rating; output current is provided to one or more light-emitting semiconductor devices through two or more output stages, each coupled to receive said bus voltage and each configured to provide said output current at an output power specific to the respective output stage; and the sum of output powers of said two or more output stages is jointly limited to a combined power value that is smaller than or equal to said power rating.

At switch-on the method can be thought to begin from forming the switching pulses to the switching transistor according to step 801. Since the output stages receive their operating power from the first converter means, switching pulses can naturally be formed only after the first converter means has begun producing the bus voltage. Steps 802 and 803 correspond to producing an indicator value indicative of the sum of output powers of the two or more output stages. To this end, output voltage indicators are taken from all output stages to summing and averaging in step 802, and the averaged sum is converted further to an indicator value in step 803.

A nominal value comes from output current setting and corresponds to a desired maximum output current value of each individual output stage when the sum of output powers of said two or more output stages is not jointly limited. Comparing the indicator value to the nominal value takes place at step 804. If the indicator value did not reach or go beyond the nominal value, the setpoint value is formed in step 805 directly from the nominal value. It is possible to use the nominal value directly as the setpoint value, of forming the setpoint value at step 805 may involve some kind of scaling, buffering, or other straightforward processing that aims at bringing the setpoint value to the appropriate input of the driver circuit at the appropriate magnitude; for example, equal to or larger than 2.7 V if a MP24894 type driver circuit is used.

As a response to the indicator value reaching or going beyond the nominal value, the method comprises decreasing the current limit value that an output current limiting arrangement in each output stage uses to limit the output current of the respective output stage. This takes place by decreasing the setpoint value from what it would otherwise be, according to step 806, and by taking the setpoint value (which now is between 0.3 V and 2.7 V, if the MP24894 is used) to the appropriate input of the driver circuit.

Fig. 8 illustrates how the MP24894, which here is used as a non-limiting example of a driver circuit, is internally responsible of generating a lower limit (0.3 V) and an upper limit (2.7 V) and performing a double comparison at step 807. If the voltage between its EN/DIM and GND pins is below the lower limit, the forming of switching pulses is disabled altogether in accordance with step 808. If the voltage is over the upper limit, a current limit value is formed that corresponds to 100% of the desired maximum output current at step 809. A voltage between the upper and lower limits causes the current limit value to be decreased in accordance with step 810 so that the actual output current will be between 20% and 100% of the maximum output current.

Once the current limit value has been formed, the current feedback functionality of the driver circuit works in a way known as such, by making a comparison at step 811 between a current measurement value and the current limit value, and by limiting the forming of switching pulses in accordance with step 812 if the output current has reached the limit value.

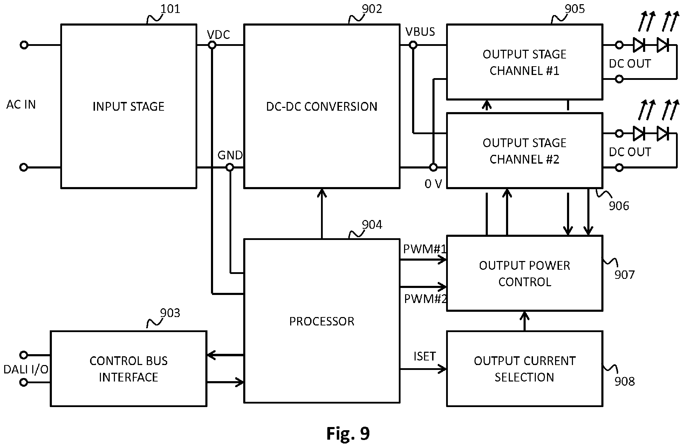

Fig. 5 assumed that the output current setting was done in a fixed manned by coupling an ISET resistor to a nominal value generating block. Such an approach is frequently used in so-called constant current LED drivers that aim at making the LEDs always shine at constant brightness. Fig. 9 illustrates a controllable driver device, in which AC mains voltage is coupled to an input stage 101, which in turn feeds a first converter means 902 that produces a bus voltage and has a power rating. Another input coupling to the driver device of fig. 9 comes through a control bus interface 903.Fig. 9 names the control bus a DALI (digital addressable lighting interface) bus, but many other control connections could be used quite as well.

The control bus interface 903 conveys bidirectional data traffic to and from a processor 904, which has connections to more or less all other functional blocks of the driver device and has overall responsibility of the operation of the driver device. As an example, the processor 904 may receive dimming commands through the control bus interface 903 and change the brightness of the LEDs coupled to the outputs of the output stages 905 and 906 correspondingly. In the driver device of fig. 9 the brightness of the LEDs is changed through PWM (pulse width modulation), which means repeatedly enabling and disabling the operation of the appropriate output stage(s) at a frequency and duty cycle decided by the processor 904. Thus the output stages 905 and 906, which are coupled to receive the bus voltage, provide output current to one or more LEDs in pulses, while the pulse frequency (also known as the PWM frequency) is sufficiently high that a human observer only recognizes the produced light as dimmed to a level defined by the PWM duty cycle. The PWM signals go through an output power control block 907, which - together with an output current selection block 906 - also implements jointly limiting the sum of output powers of the output stages 905 and 906 to a combined power value that is smaller than or equal to the power rating of the first converter means 902.

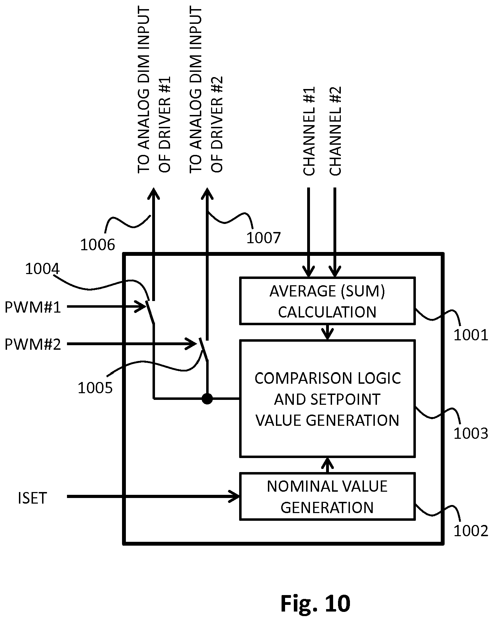

Fig. 10 shows an example of how the operation of blocks 907 and 908 in fig. 9 can be organized. The output voltage indicators from the output stages come to block 1001 for summing and averaging, just like in block 504 of fig. 5. The nominal value is generated in block 1002 on the basis of an ISET value received from the processor; the processor may have a D/A-converter-equipped output for outputting an analog ISET value, or the conversion from digital to analog may be made in the nominal value generation block 1002. Even if the driver device comprises a processor in this case, it is possible to alternatively have the output current set simply with an ISET resistor coupled to the nominal value generation block 1002 just like in fig. 5, instead of receiving an ISET value from the processor.

The common output power limiter of fig. 10 is configured to produce an indicator value indicative of the sum of output powers of the output stages, and to compare the indicator value to the nominal value in order to find out whether the indicator value goes beyond the nominal value. This takes place in block 1003, just like block 505 of fig. 5. The result of the comparison is a setpoint value that either corresponds directly to the nominal value (in case the indicator value did not go beyond the nominal value) or is changed by an amount proportional to the difference (in case the indicator value went beyond the nominal value). Instead of taking the setpoint value as such to the appropriate control inputs of the driver circuits in the output stages, it is taken through switch 1004 to the first output stage and through switch 1005 to the second output stage. The PWM signals from the processor drive the switches 1004 and 1005. Thus whenever a PWM signal has a LOW value, the corresponding switch is open, which disables the driver circuit in the corresponding output stage regardless of the actual setpoint value. Similarly whenever a PWM signal has a HIGH value, the corresponding switch is closed, and the setpoint value is let through to the enabling/dimming input of the corresponding driver circuit.

Although functions have been described with reference to certain features, those functions may be performable by other features whether described or not. Although features have been described with reference to certain embodiments, those features may also be present in other embodiments whether described or not.

Changes and modifications to the embodiments described above are possible without departing from the scope of the appended claims. For example, even if the described embodiments have mainly focused on driver devices that have exactly two output stages, the same principle of jointly limiting the sum of output powers can be applied regardless of the number of output stages. Even if the described embodiments have mainly focused on driver devices where the driver circuit has an EN/DIM input that affects the output current limiting function, the principle of jointly limiting the output powers of parallel output stages could also be implemented so that there is a fixed setpoint value for output current limitation, but the output power limiter has some time-based (not output-current-based) effect on how long the switching pulses in the output stages are allowed to become.

Also even if most of the described embodiments have suggested making the indicator value inversely proportional to the averaged sum of output voltage indicators, it is possible to present solutions in which the indicator value is directly proportional to the averaged sum of voltage indicators, and going beyond the nominal value is taken as becoming larger than the nominal value. Being (directly or inversely) proportional to does not need to mean exact mathematical proportionality, but mainly expresses the fact that is one becomes bigger, the other becomes also bigger (direct proportionality) or the other becomes smaller (inverse proportionality).

## Claims

1. A driver device for providing output current for one or more light-emitting semiconductor devices, the driver device comprising
a first converter means (102, 902) for producing a bus voltage, said first converter means (102, 902) having a power rating, and
two or more output stages (203, 204, 401, 905, 906), each coupled to receive said bus voltage and each configured to provide, at an output power specific to the respective output stage, output current to one or more light-emitting semiconductor devices coupled to the output of the respective output stage;
**characterized in that** the driver device comprises:
a common output power limiter (201, 501, 907) configured to limit the sum of output powers of said two or more output stages (203, 204, 401, 905, 906) to a combined power value that is smaller than or equal to said power rating.

2. A driver device according to claim 1, wherein:
each of said two or more output stages (203, 204, 401, 905, 906) comprises an output current limiting arrangement (306) configured to limit the output current of the respective output stage to an output current value that is smaller than or equal to a current limit value,
the common output power limiter (201, 501, 907) is configured to produce an indicator value indicative of the sum of output powers of said two or more output stages (203, 204, 401, 905, 906), and
the common output power limiter (201, 501, 907) is configured to decrease the current limit value used by said output current limiting arrangement as a response to said indicator value reaching or going beyond a nominal value.

3. A driver device according to claim 2, wherein the common output power limiter (201, 501, 907) is configured to produce said indicator value by taking an averaged sum of output voltage indicators that indicate output voltages of said two or more output stages (203, 204, 401, 905, 906), and converting said averaged sum into a value that is inversely proportional to said averaged sum.

4. A driver device according to claim 3, wherein the common output power limiter (201, 501, 907) is configured to:
respond to said indicator value being larger than or equal to the nominal value by not decreasing the current limit value, and
respond to said indicator value being smaller than the nominal value by decreasing the current limit value by an amount proportional to the difference between said indicator value and the nominal value.

5. A driver device according to any of claims 3 or 4, wherein each of said two or more output stages (203, 204, 401, 905, 906) has the configuration of a switched-mode power supply with a switching transistor (302, 402), and the common output power limiter (201, 501, 907) is configured to use, as said output voltage indicators, voltage waveforms taken from one electrode of the switching transistors (302, 402).

6. A driver device according to any of claims 2 to 5, wherein:
each of said two or more output stages (203, 204, 401, 905, 906) has the configuration of a switched-mode power supply with a switching transistor (302, 402),
each of said two or more output stages (203, 204, 401, 905, 906) comprises a driver circuit (304) for generating switching pulses for the switching transistor (302, 402),
the driver circuit (304) in each of said two or more output stages (203, 204, 401, 905, 906) comprises a current feedback functionality that is configured to act as said output current limiting arrangement,
the driver circuit in each of said two or more output stages (203, 204, 401, 905, 906) comprises a dimming input, and the driver circuit is configured to respond to an analog dimming signal brought to said dimming input by decreasing the current limit value used by the output current limiting arrangement, and
the common output power limiter (201, 501, 907) is configured to vary, within a dimming range, a setpoint value coupled to said dimming input as a response to said indicator value reaching or going beyond the nominal value.

7. A lighting arrangement comprising
a driver device according to any of claims 1 to 6, and
light output means electrically coupled to said driver device.

8. A method for providing output current for one or more light-emitting semiconductor devices, the method comprising
producing a bus voltage with a first converter means (102, 902) having a power rating, and
providing output current to one or more light-emitting semiconductor devices through two or more output stages (203, 204, 401, 905, 906), each coupled to receive said bus voltage and each configured to provide said output current at an output power specific to the respective output stage;
**characterized in that** the method comprises:
jointly limiting the sum of output powers of said two or more output stages (203, 204, 401, 905, 906) to a combined power value that is smaller than or equal to said power rating.

9. A method according to claim 8, wherein the step of jointly limiting the sum of output powers of said two or more output stages comprises:
producing (803) an indicator value indicative of the sum of output powers of said two or more output stages,
comparing (804) said indicator value to a nominal value, and
as a response to said indicator value reaching or going beyond said nominal value, decreasing (806) a current limit value that an output current limiting arrangement in each output stage uses to limit the output current of the respective output stage.

10. A method according to claim 9, wherein the nominal value corresponds to a desired maximum output current value for each individual output stage set without taking into account that the sum of said output powers of said two or more output stages will be jointly limited.

## Patentansprüche

1. Treibervorrichtung zum Bereitstellen von Ausgangsstrom für eine oder mehrere lichtemittierende Halbleitervorrichtungen, die Treibervorrichtung umfassend
ein erstes Wandlermittel (102, 902) zum Erzeugen einer Busspannung, wobei das erste Wandlermittel (102, 902) eine Nennleistung aufweist, und
zwei oder mehrere Ausgangsstufen (203, 204, 401, 905, 906), wobei jede gekoppelt ist, um die Busspannung zu empfangen, und jede konfiguriert ist, um Ausgangsstrom mit einer für die jeweiligen Ausgangsstufen spezifischen Ausgangsleistung für eine oder mehrere lichtemittierende Halbleitervorrichtungen, die mit dem Ausgang der jeweiligen Ausgangsstufe gekoppelt sind, bereitzustellen;
**dadurch gekennzeichnet, dass** die Treibervorrichtung umfasst:
einen gemeinsamen Ausgangsleistungsbegrenzer (201, 501, 907), der konfiguriert ist, um die Summe der Ausgangsleistungen der zwei oder mehreren Ausgangsstufen (203, 204, 401, 905, 906) auf einen kombinierten Leistungswert zu begrenzen, der kleiner oder gleich der Nennleistung ist.

2. Treibervorrichtung nach Anspruch 1, wobei:
jede der zwei oder mehreren Ausgangsstufen (203, 204, 401, 905, 906) eine Ausgangsstrombegrenzungsanordnung (306) umfasst, die konfiguriert ist, um die Ausgangsleistung der jeweiligen Ausgangsstufen auf einen Ausgangsleistungswert zu begrenzen, der kleiner oder gleich eines Stromgrenzwerts ist,
der gemeinsame Ausgangsleistungsbegrenzer (201, 501, 907) konfiguriert ist, um einen Indikatorwert zu erzeugen, der die Summe der Ausgangsleistungen der zwei oder mehreren Ausgangsstufen (203, 204, 401, 905, 906) anzeigt, und
der gemeinsame Ausgangsleistungsbegrenzer (201, 501, 907) konfiguriert ist, um den Stromgrenzwert zu verringern, der von der Ausgangsstrombegrenzungsanordnung als eine Reaktion auf den Indikatorwert, der einen Nennwert erreicht oder übersteigt, verwendet wird.

3. Treibervorrichtung nach Anspruch 2, wobei der gemeinsame Ausgangsleistungsbegrenzer (201, 501, 907) konfiguriert ist, um den Indikatorwert zu produzieren, indem eine Durchschnittssumme der Ausgangsspannungsindikatoren hergenommen wird, die die Ausgangsspannungen der zwei oder mehreren Ausgangsstufen (203, 204, 401, 905, 906) angeben, und die Durchschnittssumme in einen Wert umgewandelt wird, der umgekehrt proportional zur Durchschnittssumme ist.

4. Treibervorrichtung nach Anspruch 3, wobei der gemeinsame Ausgangsleistungsbegrenzer (201, 501, 907) konfiguriert ist, um:
auf den Indikatorwert, der größer oder gleich dem Nennwert ist, zu reagieren, indem der Stromgrenzwert nicht verringert wird, und
auf den Indikatorwert, der kleiner als der Nennwert ist, zu reagieren, indem der Stromgrenzwert um eine Menge, die proportional zur Differenz zwischen dem Indikatorwert und dem Nennwert ist, verringert wird.

5. Treibervorrichtung nach einem der Ansprüche 3 oder 4, wobei jede der zwei oder mehreren Ausgangsstufen (203, 204, 401, 905, 906) die Ausgestaltung eines Schaltnetzteils mit einem Schalttransistor (302, 402) aufweist und der gemeinsame Ausgangsleistungsbegrenzer (201, 501, 907) konfiguriert ist, um Spannungsformen, die von einer Elektrode der Schalttransistoren (302, 402) hergenommen sind, als die Ausgangsleistungsindikatoren zu verwenden.

6. Treibervorrichtung nach einem der Ansprüche 2 bis 5, wobei:
jede der zwei oder mehreren Ausgangsstufen (203, 204, 401, 905, 906) die Ausgestaltung eines Schaltnetzteils mit einem Schalttransistor (302, 402) aufweist,
jede der zwei oder mehreren Ausgangsstufen (203, 204, 401, 905, 906) eine Treiberschaltung (304) zum Erzeugen von Schaltimpulsen für den Schalttransistor (302, 402) umfasst,
die Treiberschaltung (304) in jeder der zwei oder mehreren Ausgangsstufen (203, 204, 401, 905, 906) eine Stromrückkopplungsfunktionalität umfasst, die konfiguriert ist, um als die Ausgangsstrombegrenzungsanordnung zu fungieren,
die Treiberschaltung in jeder der zwei oder mehreren Ausgangsstufen (203, 204, 401, 905, 906) eine Verdunkelungseingabe umfasst und die Treiberschaltung konfiguriert ist, um auf ein analoges Verdunkelungssignal zu reagieren, das zu der Verdunkelungseingabe durch Verringern des Stromgrenzwerts, der von der Ausgangsstrombegrenzungsanordnung verwendet wird, gebracht wurde, und
der gemeinsame Ausgangsleistungsbegrenzer (201, 501, 907) konfiguriert ist, um innerhalb eines Verdunkelungsbereichs einen Sollwert zu variieren, der mit der Verdunkelungseingabe als eine Reaktion auf den Indikatorwert, der den Nennwert erreicht oder übersteigt, gekoppelt ist.

7. Beleuchtungsanordnung, umfassend
eine Treibervorrichtung nach einem der Ansprüche 1 bis 6, und
Lichtausgabemittel, die elektrisch mit der Treibervorrichtung gekoppelt sind.

8. Verfahren zum Bereitstellen von Ausgangsstrom für eine oder mehrere lichtemittierende Halbleitervorrichtungen, das Verfahren umfassend
Erzeugen einer Busspannung mit einem ersten Wandelmittel (102, 902), das eine Nennleistung aufweist, und
Bereitstellen von Ausgangsstrom für eine oder mehrere lichtemittierende Halbleitervorrichtungen durch zwei oder mehrere Ausgangsstufen (203, 204, 401, 905, 906), von denen jede gekoppelt ist, um die Busspannung zu empfangen, und jede konfiguriert ist, um den Ausgangsstrom mit einer für die jeweiligen Ausgangsstufen spezifischen Ausgangsleistung breitzustellen;
**dadurch gekennzeichnet, dass** das Verfahren umfasst:
gemeinsames Begrenzen der Summe von Ausgangsleistungen der zwei oder mehreren Ausgangsstufen (203, 204, 401, 905, 906) auf einen kombinierten Stromwert, der kleiner oder gleich der Nennleistung ist.

9. Verfahren nach Anspruch 8, wobei der Schritt des gemeinsamen Begrenzens der Summe von Ausgangsleistungen der zwei oder mehreren Ausgangsstufen umfasst:
Erzeugen (803) eines Indikatorwerts, der die Summe von Ausgangsleistungen der zwei oder mehreren Ausgangsstufen angibt,
Vergleichen (804) des Indikatorwerts mit einem Nennwert, und
als eine Reaktion darauf, dass der Indikatorwert den Nennwert erreicht oder übersteigt, Verringern (806) eines Stromgrenzwerts, den eine Ausgangsstrombegrenzungsanordnung in jeder Ausgangsstufe verwendet, um den Ausgangsstrom der jeweiligen Ausgangsstufe zu begrenzen.

10. Verfahren nach Anspruch 9, wobei der Nennwert einem gewünschten maximalen Ausgangsstromwert für jede individuelle Ausgangsstufe entspricht, welcher eingestellt wird, ohne einzukalkulieren, dass die Summe der Ausgangsleistungen der zwei oder mehreren Ausgangsstufen gemeinsam begrenzt werden.

## Revendications

1. Dispositif pilote pour fournir un courant de sortie pour un ou plusieurs dispositifs électroluminescents à semi-conducteur, c'est-à-dire dispositif pilote comprenant :
un premier moyen convertisseur (102, 902) pour produire une tension de bus, ledit premier moyen convertisseur (102, 902) ayant une puissance nominale, et
deux étages de sortie (203, 204, 401, 905, 906) ou plus, chacun étant couplé de façon à recevoir ladite tension de bus et chacun étant configuré de façon à fournir, à une puissance de sortie spécifique au stage de sortie respectif, un courant de sortie à un ou plusieurs dispositifs électroluminescents à semi-conducteur couplés à la sortie de l'étage de sortie respectif ;
**caractérisé en ce que** ce dispositif pilote comprend :
un limiteur de puissances de sortie en commun (201, 501, 907) configuré de façon à limiter la somme des puissances de sortie desdits deux étages de sortie (203, 204, 401, 905, 906) ou plus à une valeur de puissance combinée qui est plus petite que ou égale à ladite puissance nominale.

2. Dispositif pilote selon la revendication 1, dans lequel :
chacun desdits deux étages de sortie (203, 204, 401, 905, 906) ou plus comprend un agencement de limitation de courant de sortie (306) configuré de façon à limiter le courant de sortie de l'étage de sortie respectif à une valeur de courant de sortie qui est plus petite que ou égale à une valeur limite de courant,
le limiteur de puissances de sortie en commun (201, 501, 907) est configuré de façon à produire une valeur indicatrice qui est indicative de la somme des puissances de sortie desdits deux étages de sortie (203, 204, 401, 905, 906) ou plus, et
le limiteur de puissances de sortie en commun (201, 501, 907) est configuré de façon à diminuer la valeur limite de courant par ledit agencement de limitation du courant de sortie en réponse à ladite valeur indicatrice atteignant ou dépassant une valeur nominale.

3. Dispositif pilote selon la revendication 2, dans lequel le limiteur de puissances de sortie en commun (201, 501, 907) est configuré de façon à produire ladite valeur indicatrice en prenant une somme moyennée des indicateurs de tensions de sortie qui indiquent les tensions de sortie desdits deux étages de sortie (203, 204, 401, 905, 906) ou plus, et en convertissant ladite somme moyennée en une valeur qui est inversement proportionnelle à ladite somme moyennée.

4. Dispositif pilote selon la revendication 3, dans lequel le limiteur de puissances de sortie en commun (201, 501, 907) est configuré de façon à :
répondre au fait que ladite valeur indicatrice est plus grande que ou égale à la valeur nominale en ne diminuant pas la valeur limite de courant, et à répondre au fait que ladite valeur indicatrice est plus petite que la valeur nominale en diminuant la valeur limite de courant d'une quantité proportionnelle à la différence entre ladite valeur indicatrice et la valeur nominale.

5. Dispositif pilote selon l'une quelconque des revendications 3 ou 4, dans lequel chacun desdits deux étages de sortie (203, 204, 401, 905, 906) ou plus a la configuration d'une alimentation à découpage avec un transistor de commutation (302, 402), et le limiteur de puissances de sortie en commun (201, 501, 907) est configuré de façon à utiliser, comme dits indicateurs de tension, des formes d'ondes de tension prises d'une électrode des transistors de commutation (302, 402).

6. Dispositif pilote selon l'une quelconque des revendications 2 à 5, dans lequel :
chacun desdits deux étages de sortie (203, 204, 401, 905, 906) ou plus a la configuration d'une alimentation à découpage avec un transistor de commutation (302, 402),
chacun desdits deux étages de sortie (203, 204, 401, 905, 906) ou plus comporte un circuit d'attaque (304) pour générer des impulsions de commutation pour le transistor de commutation (302, 402),
le circuit d'attaque (304) dans chacun desdits deux étages de sortie (203, 204, 401, 905, 906) ou plus comprend une fonctionnalité de rétroaction de courant qui est configurée de façon à agir comme ledit agencement de limitation du courant de sortie,
le circuit d'attaque dans chacun desdits deux étages de sortie (203, 204, 401, 905, 906) ou plus comporte une entrée de gradation, et le circuit d'attaque est configuré de façon à répondre à un signal analogique de gradation amené à ladite entrée de gradation en diminuant la valeur limite de courant utilisée par l'agencement de limitation du courant de sortie, et
le limiteur de puissances de sortie en commun (201, 501, 907) est configuré de façon à varier, dans les limites d'une plage de gradation, une valeur de consigne couplée à ladite entrée de gradation en réponse à ladite valeur indicatrice atteignant ou dépassant la valeur nominale.

7. Agencement d'éclairage comprenant :
un dispositif pilote selon l'une quelconque des revendications 1 à 6, et un moyen d'émission de lumière couplé électriquement audit dispositif pilote.

8. Procédé pour fournir un courant de sortie pour un ou plusieurs dispositifs électroluminescents à semi-conducteur, ce procédé comprenant :
la production d'une tension de bus avec un premier moyen convertisseur (102, 902) ayant une puissance nominale, et
la fourniture d'un courant de sortie à un ou plusieurs dispositifs électroluminescents à semi-conducteur au moyen de deux étages de sortie (203, 204, 401, 905, 906) ou plus, chacun étant couplé de façon à recevoir ladite tension de bus et chacun étant configuré de façon à fournir ledit courant de sortie à une puissance de sortie spécifique au stage de sortie respectif ;
**caractérisé en ce que** ce procédé comprend :
la limitation en commun de la somme des puissances de sortie desdits deux étages de sortie (203, 204, 401, 905, 906) ou plus à une valeur de puissance combinée qui est plus petite que ou égale à ladite puissance nominale.

9. Procédé selon la revendication 8, dans lequel l'étape de limitation en commun de la somme des puissances desdits deux étages de sortie ou plus comprend :
la production (803) d'une valeur indicatrice qui est indicative de la somme des puissances de sortie desdits deux étages de sortie ou plus,
la comparaison (804) de ladite valeur indicatrice avec une valeur nominale, et, en réponse auxdites valeurs indicatrices atteignant ou dépassant ladite valeur nominale, la diminution (806) d'une valeur limite de courant qu'un agencement de limitation de courant de sortie dans chaque étage de sortie utilise pour limiter le courant de sortie de l'étage de sortie respectif.

10. Procédé selon la revendication 9, dans lequel la valeur nominale correspond à une valeur de courant de sortie maximum désirée pour chaque étage de sortie individuel définie sans tenir compte que la somme desdites puissances de sortie desdits deux étages de sortie ou plus sera limitée en commun.
